# EUROPEAN PATENT APPLICATION

(11) **EP 4 276 749 A1**
(43) Date of publication of application: **15.11.2023**
(21) Application number: 23172981.5
(22) Date of filing: 11.05.2023
(51) Int. Cl.: G06T 7/00

(54) **A SYSTEM AND A METHOD FOR EVALUATION OF SHEET METAL FORMING TOOL**

(30) Priority: 12.05.2022 SI 202200075
(71) Applicant: Univerza v Mariboru, 2000 Maribor (SI)
(72) Inventor: Berus, Lucijano, 2000 Maribor (SI); Ficko, Mirko, 2000 Maribor (SI)
(74) Representative: Patentni Biro AF d.o.o.

(57) **Abstract**

The method for evaluation of sheet metal forming tool on the basis of dye spotting images comprises the following steps:
- segmentation of the image, wherein each segment comprises all image points, which are similar in their colour and/or location,
- determination of brightness level of each segment, wherein the number of classes is 2 or more,
- performing a process to obtain at least a 2D grid with at least triangular grid elements for allocation of points that are in the same place below and above the pre-product and/or the tool,
- determination of brightness level of each grid element, wherein the grid element belongs to the brightness level into which an average point or triangle of the grid element (modus, average, median) belongs,
- performing and optionally repeating previous steps to obtain data for at least two surfaces,
- generating a global grid with Boolean operators AND, OR, NOT, AND NOT, UNION and INTERSECT, which are used between grid elements in the same position, wherein the global grid represents surfaces where a direct contact between the surface of the pre-product and the tool has occurred, surfaces with no contact and/or surfaces with partial contact.

## Description

### Field of the invention

The invention belongs to the field of mechanical processing of metal materials, more precisely to the field of processes for forming sheet metal. Partly, the invention belongs to the field of computer science, most particularly to the field of equipment and methods for image analysis. The present invention relates to a system and a method for evaluation of sheet metal forming tool.

### Background of the invention and the technical problem

During the manufacturing process of various components, for example preforms or products made by reshaping, such as cutting, deep drawing and stamping, these come into contact with a reshaping tool in the so-called contact areas. For detecting or determining said contact areas dye spotting images are used, said images being generated by applying spotting ink (spotting paint) to the preform or pre-product. The painted pre-product is inserted into the tool and formation or reshaping movement is carried out. Areas on the pre-product, where the paint is partially or completely removed are the above-mentioned contact areas. The level of ink transfer from the product to the tool indicates the value of surface (contact) pressure between the pre-product and the tool. In general, there are three types of sensed areas based on the colouration:
- areas where the ink on the pre-product has completely disappeared are those at which the tool surface had come into a direct contact with the pre-product indicating a high surface pressure;
- areas where the ink is smeared or partly disappeared are regions at which the tool surface is in a partial contact with the pre-product, which indicates an intermediate surface pressure;
- areas where the spotting ink is mostly or completely present on the pre-product are those regions at which the tool surface had not come into contact with the pre-product, which indicates a low surface pressure.
It is required that the surface of the pre-product is not damaged or excessively reshaped with the tool. Ideally, the tool is in a closed state, when the working movement is fully performed, in an as homogenous contact with the pre-product surface as possible, so that the imprint of the spotting ink on the pre-product and/or the tool is a homogenous or even as possible. Such dye spotting images indicate that the tool is well made and resistant as well as that the reshaping process performed with such tool will be controlled.

In case contact areas are not homogenously or evenly coloured, the tool or its surface has to be further adjusted and processed. Additional processing of the tool surface may comprise welding, milling, grinding, polishing and the like. Performance of additional adjustments is again checked with spotting ink analysis, wherein the above-mentioned steps are repeated as many times as needed to prepare a suitable tool and the ink on the dye spotting image is homogenous. The whole process of ink dying, particularly repeating of steps, is time consuming and expensive.

Dye spotting images are analysed by suitably trained and experienced skilled persons. The whole analysis is performed manually, which is time-consuming and possibly less reliable, if the person performing the analysis lacks sufficient skill and/or time. Therefore, the technical problem addressed by the present invention is design of a system and a method that will allow computer-based analysis of dye spotting images.

### Prior art

The solution described in document DE102016119528A1 uses a densimeter arranged to measure the thickness of the paint on the tool, which is not exploited by the present invention.

Patent application DE 1 02014015473A1 describes a solution with a program for image processing that is based on the use of histograms, wherein the analysed dots are transferred to a CAD model. However, said transfer is not disclosed. The disadvantage of histograms is in that they are not able to sense details of contacts between surfaces, as they are only arranged to sense a full contact or its absence, while partial contacts are overlooked, thus leading to non-optimal tools. Said patent application does not comprise an explanation how the points/areas lying in the direction of tool operation on the upper and bottom side of the pre-product or the tool are determined.

Patent application WO2007087867A1 and patent EP1979109 disclose a device for processing shaping tools for sheet metal parts, wherein the sensing of the tool surface after ink spotting is carried out. On the basis of this step the tool may be further adjusted. The solution also discloses a device arranged to electronically sense the surface of the tool with the ink imprint and determines the position or the size of area that needs further processing on the basis of ink intensity function. This solution differs from the present invention, which on the contrary uses a segmented analysis of the pre-product and/or the tool after application of spotting ink.

### Description of the solution to the technical problem

The method for evaluation of sheet metal forming tool according to the invention is based on optical sensing and evaluation of contact areas where the preform/pre-product had been in contact with the tool during shaping, said evaluation using software image processing performed with advanced methods, such as machine learning, clustering, threshold, optimisation and/or stochastic algorithms that are used for data segmentation. The method according to the invention comprises at least the following steps:
a) application of spotting ink on the pre-product and compression of the pre-product with the forming tool,
b) capturing of the dye spotting image to obtain a digital image of the pre-product and/or tool from step a), wherein the image is shown in a multidimensional space; for example in 4D when it is a black and white or grey scale representation with three space coordinates and one colour/grey component, or 6D, when it is a colour representation with three space coordinates and three colour components in accordance with CIE standard, wherein the digital image may be taken in the shape of points (.ply, format .asc) or triangles (.stl, .obj, .step, formats parasolid),
c) segmentation of the image from step b) into at least two segments in order to assign individual image points or triangles, wherein each class or segment comprises points or triangles, which are similar in their colour and/or location,
d) determination of brightness level or luminance class of the pixels of each segment determined in step c),
e) performing a process to obtain at least a 2D grid, preferably 2D or 3D, wherein this allows allocation of points (.ply, .asc format) or triangles (.stl, .obj, .step, parasolid format) that are in the same place below and above the pre-product and/or the toll (depending on the direction of operation of the press), wherein this step is performed by discretizing the space where the digital image of the ink spotted pre-product and/or tool is placed, and wherein the shape of grid elements can be arbitrary n1-angular 2D shape, where n1 is greater than or equal to 3, or any n2-angled 3D shape where n2 is greater than or equal to 4,
f) determination of brightness level or luminance class of the pixels of each grid element determined in step e) wherein the grid element belongs to the brightness level into which an average point or triangle of the grid element (modus, average, median) belongs based on brightness determined in step d),
g) optionally repeating steps c), d), e) and f) to obtain data for at least two surfaces (for example bottom and upper) of the pre-product and/or the tool, which results in two or more grids with different brightness levels of grid elements in order to generate a binary grid, which is a binary representation of contact areas of each surface of the pre-product and/or the tool,
h) optionally generating a global grid with the same resolution as the 2D or 3D grid and represents contact areas where the tool had come into contact with the bottom and the upper side (with regards to the direction of operation of the press) and with the surface of the pre-product, wherein Boolean operators (such as AND, OR, NOT, AND NOT, UNION and INTERSECT) are used between grid elements in the same position, wherein the global grid may represent:
   - surfaces where a direct contact between the surface of the pre-product and the tool has occurred;
   - surfaces where no contact occurred; and/or
   - surfaces, where a partial contact occurred.

When the global grid is obtained, re-transformation of area onto the pre-product and/or tool is performed. In reality, the transformation may be performed with a projector and projection onto the tool, which simplifies manual corrections, such as grinding. The transformation is used for further actions and evaluation of the suitability of the tool (suitable correspondence, re-shaping process). It can also serve as the basis for evaluation of the tool formation or previously performed actions on the tool. If the region or area (on the pre-product) is dark, no transfer of the ink to the tool has occurred, wherein in case of light or smeared region/area on bottom and upper side, the tool requires further processing steps on these regions (in order to ensure homogenous distribution of regions/areas). Further processing may be performed in any suitable manner known to the skilled person. Optional steps are g) and h), which are not essential, if, for example, only the upper half of the pre-product is available, or the bottom half and the upper half are joined in one 3D image.

Segmentation is performed using histograms, threshold operations, clustering or machine learning. The number of segments is any number larger than 2 and smaller than the number of all image elements of the 3D image. Determination of segments may be performed before step d) or after step d). Segmentation using histograms was described in patent WO9509403A1. The threshold may be selected manually or by using one of the algorithms for threshold selection: Otsu, Mean (average of greys), Li (minimum cross entropy thresholding), Triangle, Minimum, Yen or Isodata. Machine learning segmentation is performed on the basis of learning examples, which serve to build a model with a mathematical representation of characteristic features of individual segments. The model is built on the basis of learning (it has to comprise at least 10 learning examples) and is then capable of segmentation of newly formed areas/regions of digital images of ink-dyed pre-product and/or tool. Clustering is performed so that the program is arranged to classify individual parts of the digital images (points or triangles) into classes based on similarities in properties of said points or triangles. The number of classes (at least one and smaller than all parts of the 3D image) can be predefined or a maximal distance in the hyper-space of variables is set (smaller than the hyper-distance between two most different or most distant parts of the 3D image). When the classes or segments are formed, their brightness is determined based on the level of brightness or darkness of said image points or triangles of individual segments.

Determination of brightness may be performed on the basis of a model/equation selected in the group consisting of algebraic equation, machine-learning model, or with »luminance« component of the colour in the HSL space according to CIE standard or by manual determination of brightness. In the sense of algebraic equation and in the base of blue spotting ink and RGB colour space the following equation may be used: B/(R*G) (DOI: 10.1016/j.jmapro.2020.09.022). If the space HSL is used, L interval on which image points are present, is divided into 2 to n-1 intervals (n = number of all points/triangles in the digital image), depending on the number of classes or segments of brightness into which the digital image will be divided. Instead of the L component, a grey component may be used in case of grey images, or by using the first component Y1 (component with the highest variance) during transformation of the colour space with PCA algorithm (principal component analysis). Machine learning model is prepared by selecting learning examples that form a learning database, wherein individual segments with the same brightness or class of brightness are shown. The learned regression or classification model is then used to determine brightness level or the brightness class.

When a particular level of brightness (luminance class) of each class or segment is determined, the process for creating the grid is initiated. The grid may be 2D or 3D, wherein the shape of grid elements is arbitrary. The grid may cover the whole or a part of the digital image of the pre-product and/or the tool, wherein it has to comprise of at least one grid element. If 2D grid element is used, the latter comprises all image points which are with regards to two of three spatial components of the digital image obtained with spotting ink inside the said grid element.

When the grid is obtained, brightness level of each grid element is determined. The grid element belongs to the level of brightness to which an average image point (modus, average, median) belongs. This step is performed in order to simplify data management and is an essential step when operating with digital images shown in the form of points. This allows the user to determine which image points of the pre-product and/or tool are below or above (with regards to the direction of the press).

From the grid, which is represented as a colour chart, suitable classes (for example, when faced with three classes: lightest, darkest, intermediate or combinations of lightest and intermediate, intermediate and darkest) or the range of brightness to obtain the binary grid. The latter is a binary representation of the contact surfaces of each pre-product and/or tool surface.

In order to obtain a global grid, which represents contact areas where the tool had been in contact with the pre-product on the bottom and upper side, Boolean operators between the same-positioned elements are used as described above. With operations between individual grids and generation of the global grid, parts of digital image that lye below or above are compared, thus eliminating the need to perform lavish operations on raw digital formats in the shape of points or triangles. In case of digital images represented by triangles, lower and upper areas may be found by calculating geometrical normal vectors of individual triangles. Thereby the global triangular grid is transferred to the pre-product and/or tool with the use of geometrical normal vectors or by performing only one process for creation of grids according to the process described in this paragraph.

The system for evaluation of sheet metal forming tool according to the invention, which is arranged to execute the above-described method, comprises at least the following components:
- a file, which comprises a digital representation of the pre-product and/or tool treated with spotting ink in the shape of points or triangles,
- processor and/or a graphic card for data processing,
- a memory unit for storing and running operations on data,
- a screen and a visual interface for showing results.

The system and a method for evaluation of sheet metal forming tool will be described in further detail based on an exemplary embodiment and figures, which show:

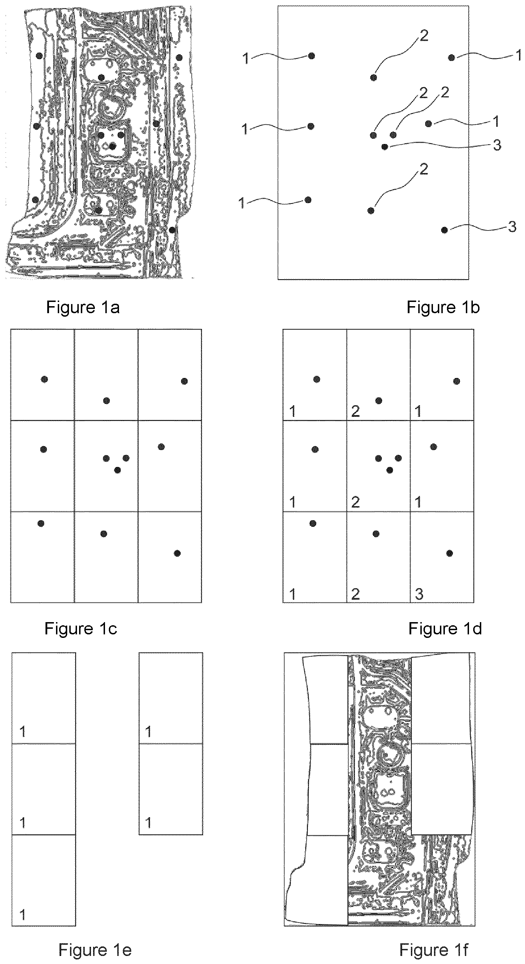

- Figure 1a: Digital 3D black-and-white (4-dimensional) image of the pre-product surface treated with spotting ink
- Figure 1b: Segmentation of selected image points to three classes and determination of brightness level of each class or segment, respectively (wherein the different classes are represented as 1-lightest, 2-intermediate and 3-darkest spotting ink colour shade)
- Figure 1c: 2D grid of the pre-product
- Figure 1d: 2D colour map of the upper half of the pre-product with spotting ink (1-lightest, 2-intermediate, 3-darkest average shade of a grid element)
- Figure 1f: A binary image of the upper half of the pre-product with spotting ink, wherein coloured grid elements represent the lightest inked areas
- Figure 1e: Transformation to the pre-product

The method for evaluation of sheet metal forming tool according to the preferred embodiment comprises the following steps:
a) application of spotting ink on the pre-product and compression of the pre-product with the forming tool,
b) capturing of the dye spotting image to obtain a digital image of the pre-product and/or tool from step a), as shown in figure 1a;
c) segmentation of the image from step b) in order to assign individual image points or triangles, wherein each class or segment comprises all points or triangles, which are similar in their colour and/or location, as shown in figure 1b for three classes (1-lightest, 2-intermediate, and 3-darkest *spotting ink colour shade*);
d) determination of brightness level or luminance class of the pixels of each segment, wherein the number of classes is larger than 2, as shown in figure 1b (1-lightest, 2-intermediate, and 3-darkest *spotting ink colour shade*);
e) performing a process to obtain at least a 2D grid, to allow allocation of points that are in the same place below and above the pre-product and/or the tool, wherein an obtained 2D grid is shown in figure 1c;
f) determination of brightness level or luminance class of the pixels of each grid element, wherein the grid element belongs to the brightness level into which an average point (modus, average, median) belongs based on brightness determined in step d), as shown in figure 1d (1-lightest, 2-intermediate, and 3-darkest average shade of a grid element);
g) performing and repeating steps c), d), e) and f) to obtain data for at least two surfaces (for example bottom and upper) of the pre-product and/or the tool, which results in two or more grids with different brightness levels of grid elements in order to generate a binary grid, which is a binary representation of contact areas of each surface of the pre-product and/or the tool,
h) generating a global grid with the same resolution as the 2D or 3D grid and represents contact areas where the tool had come into contact with the bottom and the upper side (with regards to the direction of operation of the press) and with the surface of the pre-product, wherein Boolean operators (such as AND, OR, NOT, AND NOT, UNION and INTERSECT) are used between grid elements in the same position, wherein the global grid as shown in figure 1e represents:
   - surfaces where a direct contact between the surface of the pre-product and the tool has occurred.

When the global grid is obtained, reverse transformation of areas onto the pre-product and/or tool is performed, as shown in figure 1f. The transformation is used for further actions and evaluation of the suitability of the tool. It can also serve as the basis for evaluation of the tool formation or previously performed actions on the tool. If the region or area on the pre-product is dark, no transfer of the ink to the tool has occurred, wherein in case of light or smeared region/area on bottom and upper side, the tool requires further processing steps on these regions (in order to ensure homogenous distribution of regions/areas). Further processing may be performed in any suitable manner known to the skilled person.

## Claims

1. A method for evaluation of sheet metal forming tool, **characterized in that** the method comprises the following steps:
a) application of spotting ink on a pre-product and compression of the pre-product with the forming tool,
b) capturing of the dye spotting image to obtain a digital image of the pre-product and/or tool from step a), wherein the image is shown in a multidimensional space; wherein the digital image may be taken in the shape of points (.ply, format .asc) or triangles (.stl, .obj, .step, Parasolid formats),
c) segmentation of the image from step b) into at least two segments in order to assign individual image points or triangles, wherein each class or segment comprises points or triangles, which are similar in their colour and/or location,
d) determination of brightness level or luminance class of the pixels of each segment determined in step c),
e) performing a process to obtain at least a 2D grid, preferably 2D or 3D, wherein this allows allocation of points (.ply, .asc format) or triangles (.stl, .obj, .step, parasolid format) that are in the same place below and above the pre-product and/or the tool, wherein this step is performed by discretizing the space where the digital image of the ink spotted pre-product and/or tool is placed,
f) determination of brightness level or luminance class of the pixels of each grid element determined in step e), wherein the grid element belongs to the brightness level into which an average point or triangle of the grid element, which may be modus, average, median, belongs based on brightness determined in step d),
g) performing and optionally repeating steps c), d), e) and f) to obtain data for at least two surfaces of the pre-product and/or the tool, which results in two or more grids with different brightness levels of grid elements in order to generate a binary grid, which is a binary representation of contact areas of each surface of the pre-product and/or the tool,
h) generating a global grid with the same resolution as the 2D or 3D grid and represents contact areas where the tool had come into contact with the bottom and the upper side and with the surface of the pre-product, wherein Boolean operators (such as AND, OR, NOT, AND NOT, UNION and INTERSECT) are used between grid elements in the same position, wherein the global grid may represent:
- surfaces where a direct contact between the surface of the pre-product and the tool has occurred
- surfaces where no contact occurred, and/or
- surfaces, where a partial contact occurred.

2. The method according to claim, 1, wherein the image is 4D provided that it is a black and white or grey image with three space coordinates and one colour component, or 6D provided that it is a colour representation with three space coordinates and three colour components according to CIE standard.

3. The method according to claim 1 or claim 2, wherein segmentation is performed using histograms, threshold operations, machine learning or clustering.

4. The method according to any of the preceding claims, wherein determination of brightness is performed on the basis of a model/equation selected in the group consisting of algebraic equation, machine-learning model, or with »luminance« component of the colour in space HSL according to CIE standard, or with a manual determination of brightness.

5. The method according to the preceding claim, wherein spotting ink and CIE colour space is used and for brightness determination any suitable method of the preceding claim is used.

6. The method according to any of the preceding claims, wherein in step f) the shape of grid elements is any n1 angular 2D shape with, wherein n1 is 3 or more, or any n2 angular 3D shape with, wherein n2 is 4 or more.

7. The method according to any of the preceding claims, wherein the process to obtain grid is 2D or 3D and the shape of grid elements is arbitrary, wherein the grid covers the whole or a part of the digital image of the pre-product and/or the tool and comprises at least one grid element.

8. The method according to any of the preceding claims, wherein from 2D or 3D grid shown as a colour map suitable classes are selected, wherein at least one class is selected, for example the lightest, darkest, intermediate or combinations thereof, in order to obtain a binary grid.

9. The method according to any of the preceding claims, wherein instead of Boolean operators either:
- projector is used to make a projection on the tool, or
- in case of digital images in the shape of triangles, by using geometrical normal vectors of individual triangles,
are used.

10. The method according to any of the preceding claims, wherein after generation of the global grid, a reverse transformation of the areas to the pre-product and/or the tool is made, which serves as a forecast of further steps and evaluation of tool suitability, wherein the following applies:
- If the region or area on the pre-product is dark, no transfer of the ink to the tool has occurred,
- in case of light or smeared region/area on bottom and upper side, the tool requires further processing steps on these regions, which may be performed in any suitable way.

11. A system for evaluation of sheet metal forming tool configured to perform the method according to any of the preceding claims, wherein said system comprises the following components:
- a file with a digital image of a pre-product with applied spotting ink and/or a tool in the form of dots or triangles,
- a processor and/or a graphic card configured to perform data analysis according to steps a) to g),
- a memory unit for storing and running operations,
- a monitor and a visual interface for visualization of results.
